# EUROPEAN PATENT APPLICATION

(11) **EP 2 518 108 A1**
(43) Date of publication of application: **31.10.2012**
(21) Application number: 10839428.9
(22) Date of filing: 15.12.2010
(51) Int. Cl.: C08L 29/04, C08K 5/527

(54) **RESIN COMPOSITION**

(30) Priority: 21.12.2009 JP 2009289055
(71) Applicant: Sumitomo Chemical Company, Limited, Tokyo 104-8260 (JP)
(72) Inventor: KIMURA, Yoshikazu, Osaka-shi Osaka 558-0051 (JP)
(74) Representative: Winter, Brandl, Fürniss, Hübner, Röss, Kaiser, Polte - Partnerschaft
(86) International application number: PCT/JP2010/073068
(87) International publication number: WO 2011/078198

(57) **Abstract**

A resin composition comprising an ethylene/vinyl alcohol copolymer and a phosphite compound.

A method of producing a resin composition, comprising the step of mixing an ethylene/vinyl alcohol copolymer with a phosphite compound.

A molded article obtained by heat-molding the above-described resin composition.

## Description

### Technical Field

The present invention relates to a resin composition, a production method thereof, its use and the like.

### Background Art

An ethylene/vinyl alcohol copolymer is, for example, processed into a sheet shape and used as a food wrapping material having a gas barrier property (non-patent document 1).

[Non-patent document 1] Masahiko Taniguchi, "Development of novel EVOH", Food Packaging, NIPPO Co. Ltd., 2008, May issue, p. 38-41

### Summary of the Invention

An ethylene/vinyl alcohol copolymer has a problem of deterioration of its hue by heat and shearing force in molding processing.

Under such a condition, the present inventors have investigated intensively, leading resultantly to the following inventions [1] to [6].

That is, the present invention provides [1] to [6] described below.
[1] A resin composition comprising an ethylene/vinyl alcohol copolymer and a phosphite compound represented by formula (I) : 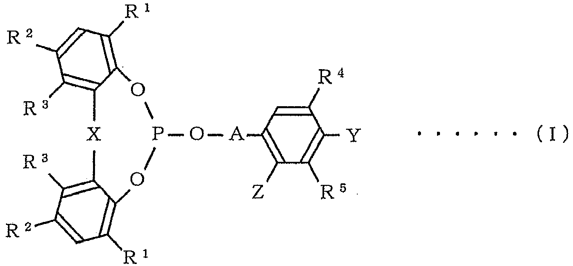 wherein, R¹, R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, and R³ represents a hydrogen atom or an alkyl group having 1 to 8 carbon atoms; two moieties of each of R¹ to R³ are the same or different; X represents a single bond, a sulfur atom or a di-valent group represented by formula (I-1): 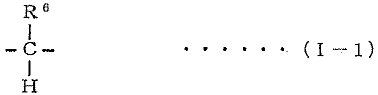 wherein, R⁶ represents a hydrogen atom, an alkyl group having 1 to 8 carbon atoms or a cycloalkyl group having 5 to 8 carbon atoms; A represents an alkylene group having 2 to 8 carbon atoms or a di-valent group represented by formula (I-2): 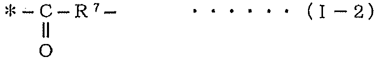 wherein, R⁷ represents a single bond or an alkylene group having 1 to 8 carbon atoms and * represents a linkage to the oxygen atom side; and one of Y and Z represents a hydroxyl group, an alkyl group having 1 to 8 carbon atoms, an alkoxy group having 1 to 8 carbon atoms or an aralkyloxy group having 7 to 12 carbon atoms and the other represents a hydrogen atom or an alkyl group having 1 to 8 carbon atoms.
[2] The resin composition according to [1], comprising 0.0001 part by weight to 5 parts by weight of the phosphite compound represented by formula (I) with respect to 100 parts by weight of the ethylene/vinyl alcohol copolymer.
[3] The resin composition according to [1] or [2], wherein the phosphite compound represented by formula (I) is 6-[3-(3-t-butyl-4-hydroxy-5-methylphenyl)propoxy]-2,4,8,10-tetra-t-butyldibenz[d,f] [1,3,2]dioxaphosphepine.
[4] A method of producing a resin composition, comprising the step of mixing an ethylene/vinyl alcohol copolymer with a phosphite compound represented by formula (I): 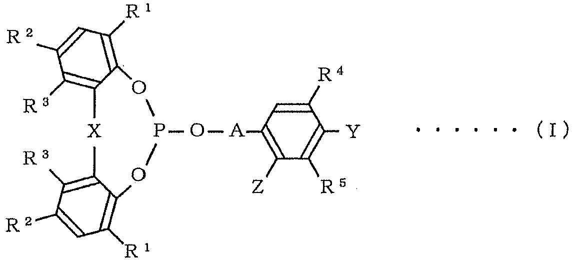 wherein, R¹, R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, and R³ represents a hydrogen atom or an alkyl group having 1 to 8 carbon atoms; two moieties of each of R¹ to R³ are the same or different; X represents a single bond, a sulfur atom or a di-valent group represented by formula (I-1): 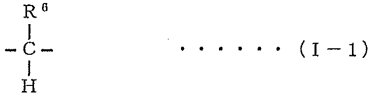 wherein, R⁶ represents a hydrogen atom, an alkyl group having 1 to 8 carbon atoms or a cycloalkyl group having 5 to 8 carbon atoms; A represents an alkylene group having 2 to 8 carbon atoms or a di-valent group represented by formula (I-2): 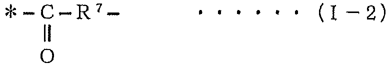 wherein, R⁷ represents a single bond or an alkylene group having 1 to 8 carbon atoms and * represents a linkage to the oxygen atom side; and one of Y and Z represents a hydroxyl group, an alkyl group having 1 to 8 carbon atoms, an alkoxy group having 1 to 8 carbon atoms or an aralkyloxy group having 7 to 12 carbon atoms and the other represents a hydrogen atom or an alkyl group having 1 to 8 carbon atoms.
[5] Use of a phosphite compound represented by formula (I): 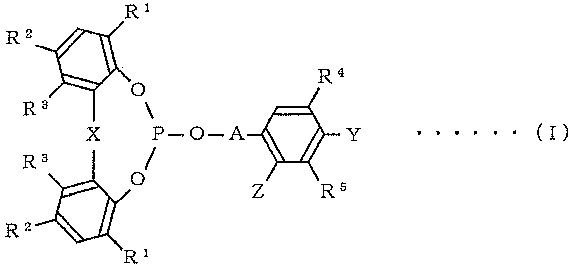 wherein, R¹, R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, and R³ represents a hydrogen atom or an alkyl group having 1 to 8 carbon atoms; two moieties of each of R¹ to R³ are the same or different; X represents a single bond, a sulfur atom or a di-valent group represented by formula (I-1): 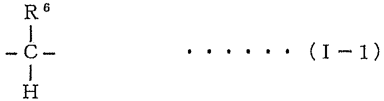 wherein, R⁶ represents a hydrogen atom, an alkyl group having 1 to 8 carbon atoms or a cycloalkyl group having 5 to 8 carbon atoms; A represents an alkylene group having 2 to 8 carbon atoms or a di-valent group represented by formula (I-2): 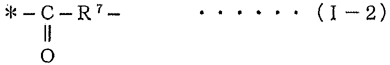 wherein, R⁷ represents a single bond or an alkylene group having 1 to 8 carbon atoms and * represents a linkage to the oxygen atom side; and one of Y and Z represents a hydroxyl group, an alkyl group having 1 to 8 carbon atoms, an alkoxy group having 1 to 8 carbon atoms or an aralkyloxy group having 7 to 12 carbon atoms and the other represents a hydrogen atom or an alkyl group having 1 to 8 carbon atoms,
   for improving the hue of an ethylene/vinyl alcohol copolymer.
[6] A molded article obtained by heat-molding the resin composition according to any one of [1] to [3].

### Modes for Carrying Out the Invention

The present invention will be illustrated in detail below.

In the present invention, the term "improving the hue" of an ethylene/vinyl alcohol copolymer includes, for example, suppression of lowering of the hue of an ethylene/vinyl alcohol copolymer as described below, by use of a phosphite compound represented by the above-described formula (I) (hereinafter, referred to as compound (I) in some cases) and the like.

The ethylene content in the ethylene/vinyl alcohol copolymer is preferably less than 60 mol%, more preferably less than 55 mol%, further preferably less than 50 mol%. The lower limit of the ethylene content is not particularly restricted, and preferably 10 mol% or more, more preferably 15 mol% or more, further preferably 20 mol% or more.

The melt flow rate (MFR) of the ethylene/vinyl alcohol copolymer is preferably in the range of 4 to 100 g/10 min, more preferably in the range of 5 to 50 g/10 min, further preferably in the range of 6 to 20 g/10 min, particularly preferably in the range of 6 to 10 g/10 min. The MFR is measured according to JIS K7210-1995 under conditions of a temperature of 21°C and a load of 21.18 N by a method A.

The ethylene/vinyl alcohol copolymer is preferably a block polymer or a random polymer composed of a structural unit derived from ethylene and a structural unit derived from vinyl alcohol, more preferably a random polymer.

The ethylene/vinyl alcohol copolymer is produced, for example, by a production method comprising the step of saponifying an ethylene/vinyl acetate copolymer, and those generally available commercially are used.

The resin composition of the present invention contains the compound (I).

Examples of the alkyl group having 1 to 8 carbon atoms represented by R¹, R², R⁴ and R⁵ in the above-described formula (I) include a methyl group, an ethyl group, a n-propyl group, an i-propyl group, a n-butyl group, an i-butyl group, a sec-butyl group, a t-butyl group, a t-pentyl group, an i-octyl group, a t-octyl group and a 2-ethylhexyl group.

Examples of the cycloalkyl group having 5 to 8 carbon atoms include a cyclopentyl group, a cyclohexyl group, a cycloheptyl group and a cyclooctyl group. Examples of the alkylcycloalkyl group having 6 to 12 carbon atoms include a 1-methylcyclopentyl group, a 1-methylcyclohexyl group and a 1-methyl-4-i-propylcyclohexyl group. Examples of the aralkyl group having 7 to 12 carbon atoms include a benzyl group, an α-methylbenzyl group and an α,α-dimethylbenzyl group.

R¹, R² and R⁴ represent each independently preferably an alkyl group having 1 to 8 carbon atoms, a cycloalkyl group having 5 to 8 carbon atoms or an alkylcycloalkyl group having 6 to 12 carbon atoms. R¹ and R⁴ represent each independently further preferably a t-alkyl group such as a t-butyl group, a t-pentyl group, a t-octyl group and the like, a cyclohexyl group or a 1-methylcyclohexyl group. R² s represent each independently preferably an alkyl group having 1 to 5 carbon atoms such as a methyl group, an ethyl group, a n-propyl group, an i-propyl group, a n-butyl group, an i-butyl group, a sec-butyl group, a t-butyl group, a t-pentyl group and the like, further preferably a methyl group, a t-butyl group or a t-pentyl group. R⁵ represents preferably an alkyl group having 1 to 5 carbon atoms such as a methyl group, an ethyl group, a n-propyl group, an i-propyl group, a n-butyl group, an i-butyl group, a sec-butyl group, a t-butyl group, a t-pentyl group and the like or a hydrogen atom, more preferably a methyl group or a hydrogen atom.

Examples of the alkyl group having 1 to 8 carbon atoms represented by R³ include a methyl group, an ethyl group, a n-propyl group, an i-propyl group, a n-butyl group, an i-butyl group, a sec-butyl group, a t-butyl group, a t-pentyl group, an i-octyl group, a t-octyl group and a 2-ethylhexyl group, preferably an alkyl group having 1 to 5 carbon atoms such as a methyl group, an ethyl group, a n-propyl group, an i-propyl group, a n-butyl group, an i-butyl group, a sec-butyl group, a t-butyl group, a t-pentyl group and the like or a hydrogen atom, more preferably a methyl group or a hydrogen atom.

X represents a single bond, a sulfur atom or a di-valent group represented by the above-described formula (I-1). Examples of the alkyl group having 1 to 8 carbon atoms represented by R⁶ in formula (I-1) include a methyl group, an ethyl group, a n-propyl group, an i-propyl group, a n-butyl group, an i-butyl group, a sec-butyl group, a t-butyl group, a t-pentyl group, an i-octyl group, a t-octyl group and a 2-ethylhexyl group, and examples of the cycloalkyl group having 5 to 8 carbon atoms include a cyclopentyl group, a cyclohexyl group, a cycloheptyl group and a cyclooctyl group. R⁶ represents preferably an alkyl group having 1 to 5 carbon atoms such as a methyl group, an ethyl group, a n-propyl group, an i-propyl group, a n-butyl group, an i-butyl group and the like or a hydrogen atom. X represents preferably a single bond or a di-valent group represented by formula (I-1), further preferably a single bond.

A represents an alkylene group having 2 to 8 carbon atoms or a di-valent group represented by the above-described formula (I-2), preferably an alkylene group having 2 to 8 carbon atoms, and examples of the alkylene group include an ethylene group, a propylene group, a butylene group, a pentamethylene group, a hexamethylene group, an octamethylene group, a 2,2-dimethyl-1,3-propylene group and the like, further preferably a propylene group. The di-valent group represented by formula (I-2) is linked to an oxygen atom and to a benzene ring, and * indicates a linkage to an oxygen atom. Examples of the alkylene group having 1 to 8 carbon atoms represented by R⁷ include a methylene group, an ethylene group, a propylene group, a butylene group, a pentamethylene group, a hexamethylene group, an octamethylene group, a 2,2-dimethyl-1,3-propylene group and the like. As the R⁷ , a single bond or an ethylene group is preferable.

One of Y and Z represents a hydroxyl group, an alkyl group having 1 to 8 carbon atoms, an alkoxy group having 1 to 8 carbon atoms or an aralkyloxy group having 7 to 12 carbon atoms and the other represents a hydrogen atom or an alkyl group having 1 to 8 carbon atoms. Here, examples of the alkyl group having 1 to 8 carbon atoms include a methyl group, an ethyl group, a n-propyl group, an i-propyl group, a n-butyl group, an i-butyl group, a sec-butyl group, a t-butyl group, a t-pentyl group, an i-octyl group, a t-octyl group and a 2-ethylhexyl group. Examples of the alkoxy group having 1 to 8 carbon atoms include a methoxy group, an ethoxy group, a n-propoxy group, an i-propoxy group, a n-butoxy group, an i-butoxy group, a sec-butoxy group, a t-butoxy group, a t-pentyloxy group, an i-octyloxy group, a t-octyloxy group and a 2-ethylhexyloxy group. Examples of the aralkyloxy group having 7 to 12 carbon atoms include a benzyloxy group, an α-methylbenzyloxy group and an α,α-dimethylbenzyloxy group.

Among such phosphite compounds represented by formula (I), preferable are those in which R¹ and R⁴ represent a t-alkyl group, a cyclohexyl or a 1-methylcyclohexyl group, R² represents an alkyl group having 1 to 5 carbon atoms, R⁵ represents a hydrogen atom or an alkyl group having 1 to 5 carbon atoms, R³ represents a hydrogen atom or an alkyl group having 1 to 5 carbon atoms, X represents a single bond and A represents an alkylene group having 2 to 8 carbon atoms.

As the compound (I), a single compound may be used or two or more compounds may be used together, in the resin composition of the present invention.

Examples of such compounds (I) include 6-[3-(3-t-butyl-4-hydroxy-5-methylphenyl)propoxy]-2,4,8,10-tetra-t-butyldibenz[d,f][1,3,2]dioxaphosphepine [commercially available from Sumitomo Chemical Co., Ltd. as "Sumilizer (registered trademark) GP"], 2,10-dimethyl-4,8-di-t-butyl-6-[3-(3,5-di-t-butyl-4-hydroxyphenyl)propoxy]-12H-dibenzo[d,g] [1,3,2]dioxaphosphocin, 2,4,8,10-tetra-t-butyl-6-[3-(3,5-di-t-butyl-4-hydroxyphenyl)propoxy]dibenzo[d,f][1,3,2]dioxaphosphepin e, 2,4,8,10-tetra-t-pentyl-6-[3-(3,5-di-t-butyl-4-hydroxyphenyl)propoxy]-12-methyl-12H-dibenzo[d,g][1,3,2]dioxaphosphocin, 2,10-dimethyl-4,8-di-t-butyl-6-[3-(3,5-di-t-butyl-4-hydroxyphenyl)propionyloxy]-12H-dibenzo[d,g] [1,3,2]dioxaphosphocin, 2,4,8,10-tetra-t-pentyl-6-[3-(3,5-di-t-butyl-4-hydroxyphenyl)propionyloxy]-12-methyl-12H-dibenzo[d,g] [1,3,2]dioxaphosphocin, 2,4,8,10-tetra-t-butyl-6-[3-(3,5-di-t-butyl-4-hydroxyphenyl)propionyloxy]-dibenzo[d,f][1,3,2]dioxaphosphepine, 2,10-dimethyl-4,8-di-t-butyl-6-(3,5-di-t-butyl-4-hydroxybenzoyloxy)-12H-dibenzo[d,g] [1,3,2]dioxaphosphocin, 2,4,8,10-tetra-t-butyl-6-(3,5-di-t-butyl-4-hydroxybenzoyloxy]-12-methyl-12H-dibenzo[d,g] [1,3,2]dioxaphosphocin, 2,10-dimethyl-4,8-di-t-butyl-6-[3-(3-methyl-4-hydroxy-5-t-butylphenyl)propoxy]-12H-dibenzo[d,g][1,3,2]dioxaphosphocin, 2,4,8,10-tetra-t-butyl-6-[3-(3,5-di-t-butyl-4-hydroxyphenyl)propoxy]-12H-dibenzo[d,g][1,3,2]dioxaphosphocin, 2,10-diethyl-4,8-dit-butyl-6-[3-(3,5-di-t-butyl-4-hydroxyphenyl)propoxy]-12H-dibenzo[d,g] [1,3,2]dioxaphosphocin, 2,4,8,10-tetra-t-butyl-6-[2,2-dimethyl-3-(3-t-butyl-4-hydroxy-5-methylphenyl)propoxy]-dibenzo[d,f][1,3,2]dioxaphosphepine and the like, and 6-[3-(3-t-butyl-4-hydroxy-5-methylphenyl)propoxy]-2,4,8,10-tetra-t-butyldibenz[d,f] [1,3,2]dioxaphosphepine is preferable.

Such compounds (I) can be produced, for example, by a method described in JP-A No. 10-273494.

The resin composition of the present invention contains the compound (I) in an amount of preferably 0.0001 to 5 parts by weight, more preferably 0.001 to 5 parts by weight, further preferably 0.07 to 3 parts by weight, further more preferably 0.07 to 2 parts by weight, particularly preferably 0.07 to 1 part by weight, more particularly preferably 0.1 to 1 part by weight, further more particularly preferably 0.1 to 0.7 parts by weight and most preferably 0.15 to 0.5 parts by weight with respect to 100 parts by weight of the ethylene/vinyl alcohol copolymer. When the content of the compound (I) is in the above-described range, lowering of hue by heat and shearing force in molding-processing is suppressed.

The resin composition of the present invention may further contain a thermoplastic resin other than the ethylene/vinyl alcohol copolymer.

Examples of the thermoplastic resin include propylene resins; ethylene resins such as high density polyethylene (HD-PE), low density polyethylene (LD-PE), linear low density polyethylene (LLDPE), ethylene/ethyl acrylate copolymer, ethylene/vinyl acetate copolymer, ethylene/methyl methacrylate copolymer and the like; methylpentene polymers; styrene resins such as poly(p-methylstyrene), poly(α-methylstyrene), acrylonitrile/styrene copolymer, acrylonitrile/butadiene/styrene copolymer, special acrylic rubber/acrylonitrile/styrene copolymer, acrylonitrile/chlorinated polyethylene/styrene copolymer, styrene/butadiene copolymer, styrene/butadiene/styrene copolymer and the like; halogenated polyolefins such as chlorinated polyethylene, polychloroprene, chlorinated rubber, polyvinyl chloride, polyvinylidene chloride and the like; acrylic resins such as acrylic resin, methacrylic resin and the like; fluorine resins; polyacetals; grafted polyphenylene ether resins; polyphenylene sulfide resins; polyamides; polyester resins such as polyethylene terephthalate, polybutylene terephthalate and the like; polycarbonates; polysulfones; polyether ether ketone; polyether sulfone; aromatic polyester resins; diallylphthalate prepolymers; silicone resins; elastomers such as 1,2-polybutadiene, polyisoprene, butadiene/acrylonitrile copolymer and the like.

The resin composition of the present invention is capable of further containing additives described in the following additive group in a range not affecting its property.

[Additive group: neutralizers, phenol type antioxidants, phosphorus-based antioxidants other than the compound (I), metal soaps, higher fatty acids, anti-blocking agents, pigments, flame retardants, nucleating agents, fillers, foaming agents and foaming auxiliary agents]

As the above-described additives, the following additives are exemplified.

Examples of the neutralizer include synthetic hydrotalcite, natural hydrotalcite and calcium hydroxide. These neutralizing agents may be used singly or in combination.

Examples of the phenol type antioxidant include pentaerythritoltetrakis[3-(3,5-di-tert-butyl-4-hydroxyphenyl)propionate, octadecyl-3-(3,5-di-tert-butyl-4-hydroxyphenyl)propionate and 3,9-bis[2-{3-(3-t-butyl-4-hydroxy-5-methylphenyl)propionyloxy}-1,1-dimethylethyl]-2,4,8,10-tetraoxaspiro[5.5]undecane. These phenol type antioxidants may be used singly or in combination.

Examples of the phosphorus-based antioxidant other than the compound (I) include tris(2,4-di-t-butylphenyl) phosphite, bis(2,4-di-t-butylphenyl)pentaerythritol diphosphite, bis(2,6-di-t-butyl-4-methylphenyl)pentaerythritol diphosphite, bis(2,4-di-cumylphenyl)pentaerythritol diphosphite and tetrakis(2,4-di-t-butylphenyl)-4,4'-biphenylene diphosphonite. These phosphorus-based antioxidants may be used singly or in combination.

Examples of the metal soap include of a Li salt of stearic acid, a Na salt of stearic acid, a Mg salt of stearic acid, a K salt of stearic acid, a Ca salt of stearic acid, a Ba salt of stearic acid, an Al salt of stearic acid, a Zn salt of stearic acid, a Fe salt of stearic acid, a Ca salt of lauric acid, a Ba salt of lauric acid, a Zn salt of lauric acid, a Ca salt of behenic acid, a Ba salt of behenic acid, a Zn salt of behenic acid, a Ca salt of 12-hydroxystearic acid, a Mg salt of 12-hydroxystearic acid and a Zn salt of 12-hydroxystearic acid. These metal soaps may be used singly or in combination.

Examples of the higher fatty acid include lauric acid, myristic acid, palmitic acid, margaric acid, stearic acid, arachidic acid and behenic acid. These higher fatty acids may be used singly or in combination.

The anti-blocking agent includes inorganic or organic anti-blocking agents such as aluminum silicate, synthetic silica, natural silica, zeolite, kaolin, diatomaceous earth and the like. These anti-blocking agents may be used singly or in combination.

Examples of the pigment include carbon black, titanium oxide, phthalocyanine pigments, quinacridone pigments, isoindolinone pigments, perylene or perinine pigments, quinophthalone pigments, diketo-pyrrolopyrrole pigments, dioxazine pigments, disazo condensed pigments and benzimidazolone pigments. These pigments may be used singly or in combination.

Examples of the flame retardant include decabromobiphenyl, antimony trioxide, phosphorus-based flame retardants and aluminum hydroxide. These flame retardants may be used singly or in combination.

Examples of the nucleating agent include sodium benzoate, sodium 2,2'-methylenebis(4,6-di-t-butylphenyl) sodium, bis(p-methylbenzylidene) sorbitol. These nucleating agents may be used singly or in combination.

Examples of the filler include calcium carbonate, silicates, glass fiber, talc, kaolin, mica, barium sulfate, carbon black, carbon fiber, zeolite, metal powders and metal oxides. These fillers may be used singly or in combination.

The resin composition of the present invention is produced by a method comprising the step of mixing an ethylene/vinyl alcohol copolymer with a compound (I). For example, a method is mentioned in which an ethylene/vinyl alcohol copolymer and a compound (I), and further, if necessary, other additives are dry-blended using a batch mode mixer such as a Henschel mixer, a super mixer and the like.

Examples of the molding method include a method comprising the step of obtaining a film-shaped or sheet-shaped molded article from the resin composition of the present invention using a single screw or multi screw extruder, and the like.

### EXAMPLES

The present invention will be described further in detail by examples below.

### (Example 1)

One hundred (100) parts by weight of an ethylene/vinyl alcohol copolymer (MFR at 190°C and 2.16 kg: 1.6, hereinafter abbreviated as "EVOH" in some cases) and 5 parts by weight of 2,4,8,10-tetra-t-butyl-6-[3-(3-methyl-4-hydroxy-5-t-butylphenyl)propoxy]dibenzo[d,f][1,3,2]dioxaphosphepine ("Sumilizer (registered trademark) GP" manufactured by Sumitomo Chemical Co., Ltd., hereinafter abbreviated as "Sumilizer GP" in some cases) were dry-blended, then, the resultant resin composition was extrusion-molded using a 30 mmϕ single screw extruder at 230°C, to obtain a resin composition in the form of pellet. The pellets were pressed at 270°C for 2 minutes, to obtain a sheet-shaped molded article having a thickness of 3 mm.

### (Examples 2 to 7)

Molded articles were obtained in the same manner as in Example 1 excepting that the use amount of Sumilizer GP was changed as shown in Table 1 in Example 1.

### (Comparative Example 1)

A molded article was obtained in the same manner as in Example 1 excepting that Sumilizer GP was not added in Example 1.

### <Evaluation Test>

The yellowness indices (hereinafter, abbreviated as "YI" in some cases) of the sheet-shaped molded articles obtained in the examples, the comparative example and the reference example described above were measured according to Testing methods for optical properties of plastics of JIS K 7105 using a colorimeter CM-3500d manufactured by KONICA MINOLTA Holdings, Inc. The results are shown in Table 1. A smaller value of YI indicates greater suppression of hue change.

**[Table 1]**

| | additive | Use amount of additive with respect to 100 parts by weight of EVOH [parts by weight] | YI |
|---|---|---|---|
| Example 1 | Sumilizer GP | 5 | 25.0 |
| Example 2 | | 1 | 20.3 |
| Example 3 | | 0.2 | 7.5 |
| Example 4 | | 0.1 | 16.4 |
| Example 5 | | 0.05 | 25.1 |
| Example 6 | | 0.001 | 25.5 |
| Example 7 | | 0.0001 | 25.7 |
| Comparative Example 1 | none | - | 29.8 |

### Industrial Applicability

According to the present invention, lowering of hue by heat and shearing force in molding-processing the resultant resin is suppressed. The molded article obtained by molding the resin composition of the present invention by co-extrusion molding, film lamination and the like can be suitably used, for example, as a packaging material for food use such as a packaging film, a bottle, a tube, a sheet molded material and the like as an intermediate layer of a multi-layer laminate constituting the packaging material.

## Claims

1. A resin composition comprising an ethylene/vinyl alcohol copolymer and a phosphite compound represented by formula (I): 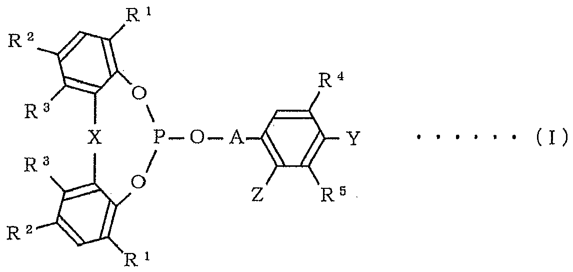 wherein, R¹, R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, and R³ represents a hydrogen atom or an alkyl group having 1 to 8 carbon atoms; two moieties of each of R¹ to R³ are the same or different; X represents a single bond, a sulfur atom or a di-valent group represented by formula (I-1): 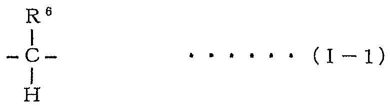 wherein, R⁶ represents a hydrogen atom, an alkyl group having 1 to 8 carbon atoms or a cycloalkyl group having 5 to 8 carbon atoms; A represents an alkylene group having 2 to 8 carbon atoms or a di-valent group represented by formula (I-2): 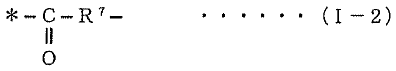 wherein, R⁷ represents a single bond or an alkylene group having 1 to 8 carbon atoms and * represents a linkage to the oxygen atom side; and one of Y and Z represents a hydroxyl group, an alkyl group having 1 to 8 carbon atoms, an alkoxy group having 1 to 8 carbon atoms or an aralkyloxy group having 7 to 12 carbon atoms and the other represents a hydrogen atom or an alkyl group having 1 to 8 carbon atoms.

2. The resin composition according to Claim 1, comprising 0.0001 part by weight to 5 parts by weight of the phosphite compound represented by formula (I) with respect to 100 parts by weight of the ethylene/vinyl alcohol copolymer.

3. The resin composition according to Claim 1, wherein the phosphite compound represented by formula (I) is 6-[3-(3-t-butyl-4-hydroxy-5-methylphenyl)propoxy]-2,4,8,10-tetra-t-butyldibenz[d,f][1,3,2]dioxaphosphepine.

4. A method of producing a resin composition, comprising the step of mixing an ethylene/vinyl alcohol copolymer with a phosphite compound represented by formula (I): 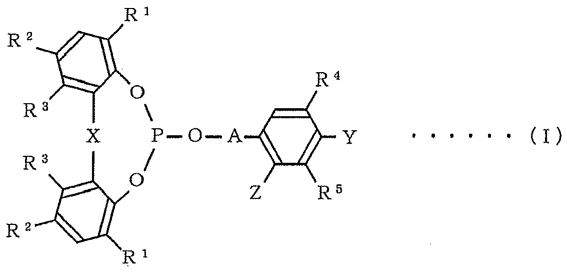 wherein, R¹, R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, and R³ represents a hydrogen atom or an alkyl group having 1 to 8 carbon atoms; two moieties of each of R¹ to R³ are the same or different; X represents a single bond, a sulfur atom or a di-valent group represented by formula (I-1): 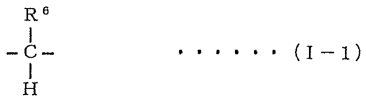 wherein, R⁶ represents a hydrogen atom, an alkyl group having 1 to 8 carbon atoms or a cycloalkyl group having 5 to 8 carbon atoms; A represents an alkylene group having 2 to 8 carbon atoms or a di-valent group represented by formula (1-2): 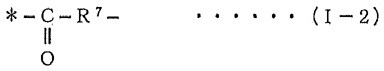 wherein, R⁷ represents a single bond or an alkylene group having 1 to 8 carbon atoms and * represents a linkage to the oxygen atom side; and one of Y and Z represents a hydroxyl group, an alkyl group having 1 to 8 carbon atoms, an alkoxy group having 1 to 8 carbon atoms or an aralkyloxy group having 7 to 12 carbon atoms and the other represents a hydrogen atom or an alkyl group having 1 to 8 carbon atoms.

5. Use of a phosphite compound represented by formula (I): 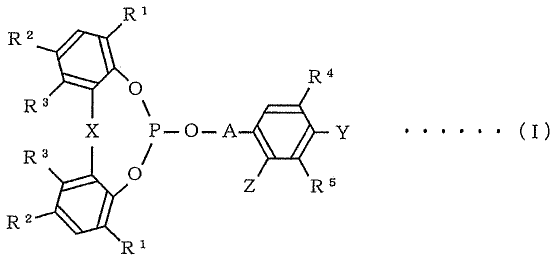 wherein, R¹, R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, and R³ represents a hydrogen atom or an alkyl group having 1 to 8 carbon atoms; two moieties of each of R¹ to R³ are the same or different; X represents a single bond, a sulfur atom or a di-valent group represented by formula (I-1): 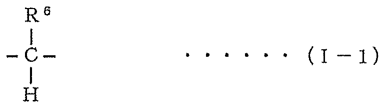 wherein, R⁶ represents a hydrogen atom, an alkyl group having 1 to 8 carbon atoms or a cycloalkyl group having 5 to 8 carbon atoms; A represents an alkylene group having 2 to 8 carbon atoms or a di-valent group represented by formula (I-2): 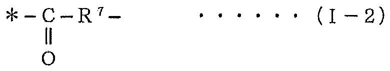 wherein, R⁷ represents a single bond or an alkylene group having 1 to 8 carbon atoms and * represents a linkage to the oxygen atom side; and one of Y and Z represents a hydroxyl group, an alkyl group having 1 to 8 carbon atoms, an alkoxy group having 1 to 8 carbon atoms or an aralkyloxy group having 7 to 12 carbon atoms and the other represents a hydrogen atom or an alkyl group having 1 to 8 carbon atoms,
for improving the hue of an ethylene/vinyl alcohol copolymer.

6. A molded article obtained by heat-molding the resin composition according to Claim 1.
